# EUROPEAN PATENT SPECIFICATION

(11) **EP 1 456 556 B1**
(45) Date of publication and mention of the grant of the patent: **09.03.2005**
(21) Application number: 01274829.9
(22) Date of filing: 27.11.2001
(51) Int. Cl.: F16D 66/02

(54) **WEAR INDICATOR FOR BRAKING PADS FOR A DISC BRAKE**
VERSCHLEISSANZEIGE FÜR BREMSBELÄGE FÜR EINE SCHEIBENBREMSE
INDICATEUR D'USURE DE SEGMENTS DE FREIN POUR UN FREIN A DISQUE

(43) Date of publication of application: 15.09.2004
(73) Proprietor: Freni Brembo S.p.A., 24035 Curno (Bergamo) (IT)
(72) Inventor: LAVEZZI, Roberto, I-24030 Brembate Di Sopra Bergamo (IT); CARMINATI, Fabiano, I-24030 Mozzo Bergamo (IT)
(74) Representative: Vittorangeli, Lucia
(86) International application number: PCT/IT2001/000599
(87) International publication number: WO 2003/046404

(56) References cited:
- DE-A- 2 734 786
- DE-B- 1 218 231
- GB-A- 1 492 611
- GB-A- 1 577 421
- LU-A- 66 292
- US-A- 4 498 559

## Description

The present invention relates to a wear indicator for braking pads for a disc brake, particularly for use on disc brakes fitted to motor vehicles and the like.

When vehicles having disc brakes of the specified type are used, it is an important requirement to be able to monitor the state of wear of the pads.

In particular, there is a need for directly readable indicators which enable the wear between scheduled maintenance operations to be determined in a rapid and simple way, possibly by the vehicle driver, while avoiding the dismantling and reassembly of the braking equipment.

In the prior art there is a known method of producing a wear indicator for braking pads for a disc brake, of the type interacting with a pad fitted in a caliper body straddling a disc. This pad comprises friction material supported by a metal plate housed in the caliper body in a position facing the disc.

The wear indicator of the known type comprises a rod which is associated with the plate by suitable fixing means and is positioned in an axial direction with respect to the brake disc, in such a way that it projects toward the outside of said caliper body. The indicator also comprises a reference associated with indicator marks provided in the rod.

In disc brakes of the specified type, the pad does not return to the initial position after it has been brought closer to the disc in the braking stage to permit contact between the braking surface of the disc and the friction material. In other words, in each braking operation, the friction material moves away from the braking surface of the disc by a quantity predetermined at the design stage. Consequently, the plate of the first pad remains closer to the disc by a quantity equal to the wear that has occurred.

Clearly, therefore, as the wear on the pads increases, the distance of the plates from the braking surface of the disc decreases.

As a result, as the wear on the friction material increases, the relative position of the marks on the rod with respect to the reference on the caliper body changes, since said rod is integral with the plate of the pad. This relative position of the marks with respect to the reference is an indicator of the state of wear of the pads.

An example of an indicator of the type described above is provided in US patent 5,678,662 in the name of " Freni Brembo S.p.A." .

However, a wear indicator of the type described above has the disadvantage of not displaying in an optimal way the progress of the state of wear of the pads, especially in cases in which the advance of the plates of said pads between the new pad condition and the worn pad condition is rather limited.

In other words, in wear indicators of the type described above, the advance of the rod toward the braking surface of the disc, and therefore the advance of the marks toward the reference, is practically equal to the thickness of the friction material of a single pad removed by braking.

In some applications, particularly in motorcycles, the layer of friction material of a new pad is relatively thin, and consequently the material removed from a new pad before the pad is considered to be worn is limited, and therefore the advance of the mark on the rod toward the reference is reduced; in other words, the marks would be too close together and therefore difficult to read.

By way of example, whereas the thickness of the friction material of a new pad is approximately 15 mm in the case of a motorcar, this thickness is approximately 5 mm or even less in the case of a motorcycle. Consequently, whereas in the first case a sufficient number of marks can be provided at a spacing of 3 or 4 mm, giving good readability, in the second case the marks would be made at very small spacings, for example barely 1 mm or even less, and would thus be very close to each other and difficult to read.

It was therefore considered necessary to produce a pad wear indicator which would be able to detect in an optimal way even small variations in the layer of the friction material of the pads. In other words, it was considered necessary to provide a wear indicator which would have greater sensitivity in the resulting indication.

The problem tackled by the present invention is that of devising a wear indicator which can be associated with a disc brake and which has structural and functional characteristics such that the aforesaid requirements are met while the drawbacks mentioned with reference to the known art are overcome.

This problem is resolved with a wear indicator which can be associated with a disc brake, said disc brake comprising a caliper body straddling a disc having a predetermined axis and pads comprising friction material supported by plates and housed in the caliper body in a position opposite and facing the sides of the disc, said indicator being provided with an indicator element provided with at least one indicating edge which interacts with at least one limit reference surface of a counterpart. The wear indicator is characterized in that, in the operating state, said at least one indicator edge essentially faces at least one limit surface which at least partially delimits an indicator aperture on opposite sides, and in that, in the operating state, said at least one reference surface changes its position with respect to the indicator edge during the wear of the friction material of the disc brake pads, thus closing or opening said indicator aperture, at least partially, on both of said essentially opposite sides.

Further characteristics and the advantages of the The wear indicator as claimed in the present invention are made clear by the following description of embodiments provided solely by way of example and without restrictive intent, in which:

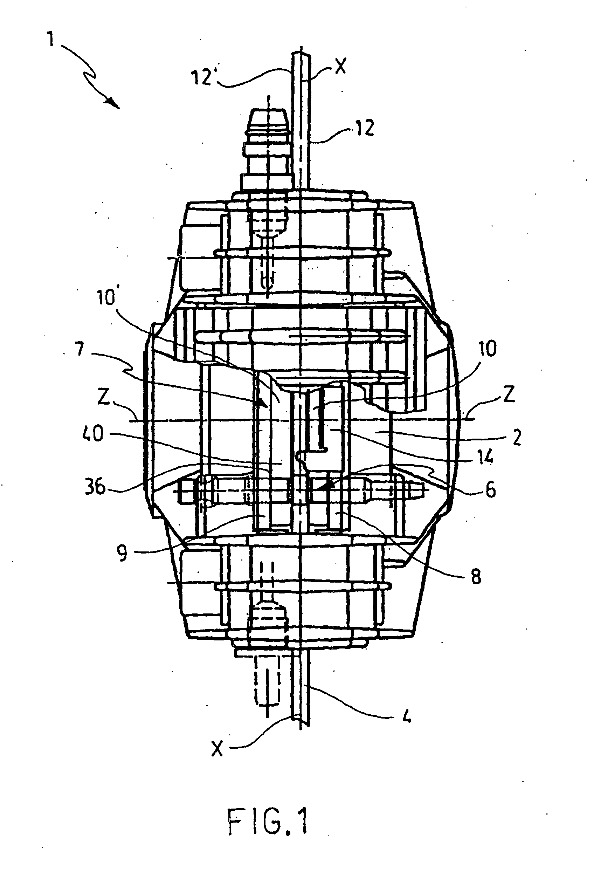

Figure 1 shows a plan view of a wear indicator associated with a disc brake;

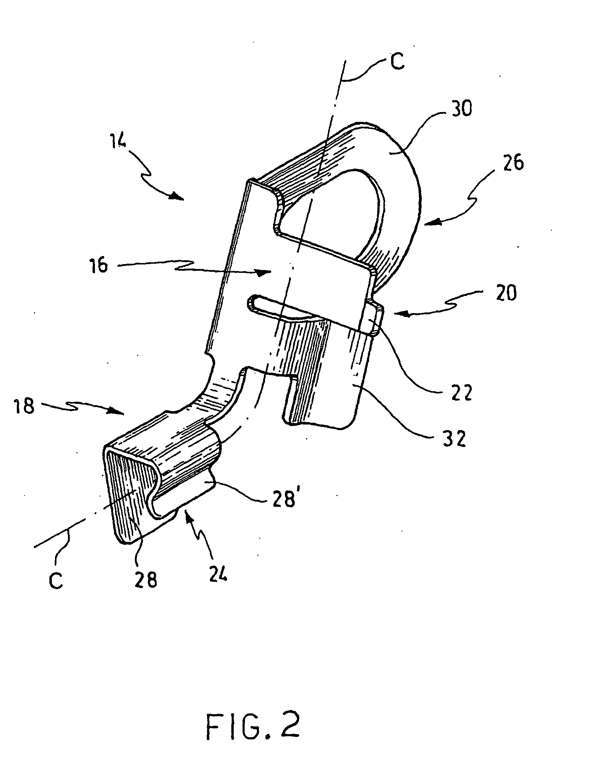

Figure 2 shows a perspective view of an embodiment of an indicator element of the wear indicator;

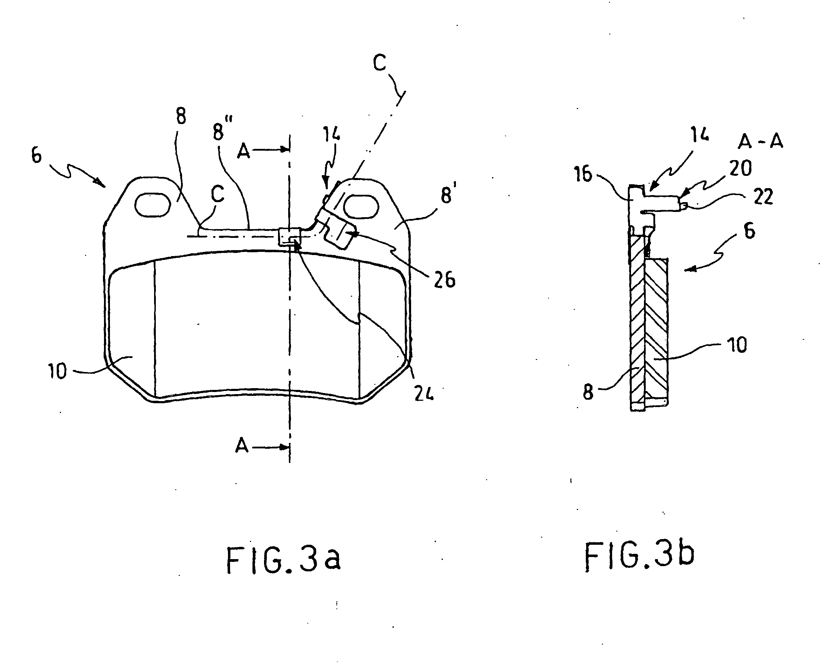

Figures 3a and 3b show, respectively, a side view and a cross-sectional view of the indicator element of Figure 2, associated with a pad of the disc brake;

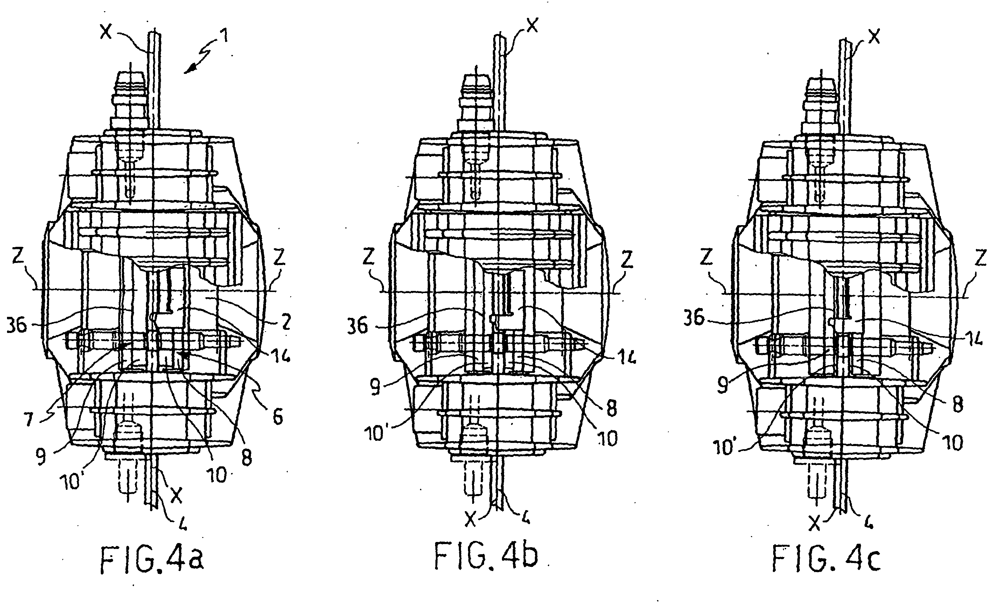

Figures 4a to 4c show the wear indicator, respectively, in the condition with new pads, with partially worn pads, and with completely worn pads;
Figure 5 shows a perspective view of a variant embodiment of the indicator element of a wear indicator;

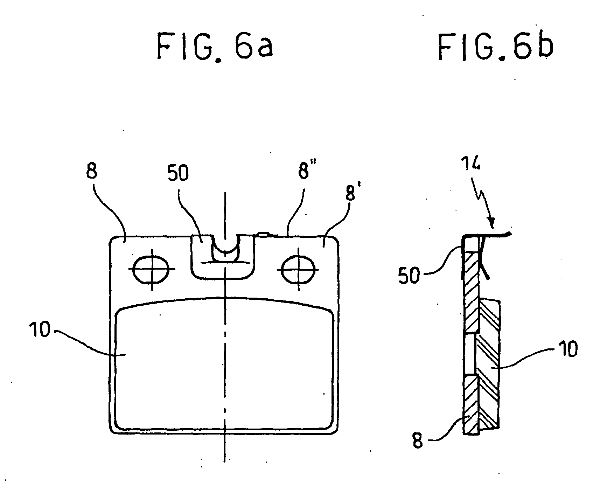

Figures 6a and 6b show, respectively, a side view and a cross-sectional view of the indicator element of Figure 5, associated with a pad of the disc brake;
Figures 7a to 7c show schematically three further embodiments of the terminal portion of the indicator element;
Figures 8a and 8b show schematically two further variant embodiments of the wear indicator associated with the disc brake.

With reference to the attached figures, the number 1 wholly indicates a disc brake comprising a caliper body 2 straddling a disc 4 having a predetermined axis Z-Z, and a first pad 6 and a second pad 7 provided with friction material 10 and 10' respectively.

The first pad 6 and the second pad 7 are housed in the caliper body 2 in such a way that the friction materials 10 and 10', supported, respectively, by a first plate 8 and a second plate 9, face each other on opposite sides of the braking surfaces 12 and 12' of the disc 4.

Structurally, said first and second pads 6 and 7 are completely identical, and therefore only one of said pads will be expressly referred to in the remainder of the description.

The friction material 10 is supported by the plate 8 in such a way that it only occupies part of the surface of said plate facing the disc 4, in such a way that a residual portion 8' of said plate is left free of said friction material 10. The plate 8 is also limited above by a bearing surface 8''.

An indicator element 14 can be associated removably with the disc brake 1.

In one embodiment, the indicator element 14 is formed by a suitably cut sheet of metal, which forms a thin plate comprising a plurality of portions which are suitably shaped and bent to determine the final configuration of said indicator element.

In particular, the indicator element 14 comprises, in one embodiment thereof, at least a first portion 16 for indicating and a second portion 18 for fixing.

Said first and second portions of the indicator element 14 are portions of the metal sheet bent in such a way that the indicating first portion 16 projects beyond the fixing second portion 18. Preferably, said indicating first portion 16 of the indicator element 14 projects orthogonally from the fixing second portion 18 of said indicator element.

The first portion 16 of the indicator element 14 has a first end integral with the second portion 18 of said indicator element and has at least one indicating edge 20 at the opposite end.

In a preferred embodiment, the indicating first portion 16 of the indicator element 14 terminates in teeth, for example a tooth 22 projecting beyond said first portion and preferably raised above the plane containing the first portion 16 of the indicator element 14.

In the described embodiment of the indicator element 14, the indicating edge 20 is thus formed by a section of the terminal profile of the first portion 16 and by the terminal profile of the raised tooth 22 of the indicator element 14.

The fixing second portion 18 of the indicator element 14 has an extension along a preferably curvilinear axis C-C. The shaping of said second portion 18 is determined by the shape of the support surface 8'' of the plate 8 of the pad with which it is associated.

Said fixing second portion 18 is preferably made in the form of a succession of gripping portions.

In one embodiment, said second portion 18 of the indicator element 14 comprises a first gripping portion 24 and a second gripping portion 26.

The first gripping portion 24 has an essentially U-shaped cross section. A first part 28 of said U-shaped section is essentially flat, while a second part 28' of said U-shaped section has a curvilinear shape formed by the succession of concave and convex parts.

The second gripping portion 26 of the fixing second portion 18 of the indicator element 14 comprises at least two gripping sides 30 and 32, preferably opposing each other and staggered in the direction of the curvilinear axis C-C of the fixing second portion 18 of the indicator element 14.

In the embodiment in this example, at least one of the gripping sides 30 and 32 is made in the form of an annular flat plate having a considerable extension, while the other gripping side has a curvilinear cross section.

The fixing second portion 18 of the indicator element 14 provides said indicator element with means of fixing to the disc brake with which said indicator element is to be associated.

In the operating state, the indicator element 14 is associated with the disc brake 1, is preferably connected for operation to one of the pads, and, in the described example, is connected to the first pad 6 of said disc brake by the fixing means.

In the operating state, the first portion 16 of the indicator element, called the indicating portion, is positioned along the direction identified by the axis Z-Z of the disc 4 of the disc brake 1 in such a way that it projects in the direction of the disc of said disc brake. In particular, in the operating state, the first portion 16 of the indicator element projects "above" the disc 4 or across said disc.

The second portion 18 of the indicator element 14 is connected to the pad 6, and is preferably connected to the plate 8 of said pad.

In particular, the shaping of the curvilinear axis C-C of said fixing second portion 18 is such that it follows the shaping of the support surface 8'' of the plate 8.

The first and second gripping portions 24 and 26 of the fixing second portion 18 of the indicator element 14 close on the residual portion 8' of the plate 8, said residual portion not being occupied by the friction material 10.

In particular, the first gripping portion 24 is closed onto the residual portion 10 in such a way as to provide a snap-fitting connection of said first gripping portion to the plate 10, the distance between the first and second portions 28 and 28' of said first gripping portion being specified in such a way that it is smaller than the thickness of the residual portion 8' of the plate, in order to provide a snap-fitting connection.

The gripping sides 30 and 32 are positioned on the plate and are joined to the lateral surfaces of said plate, but without interference with the friction material 10.

Preferably, the second gripping portion 26 also provides a snap-fitting connection to the plate, in the same way as the first gripping portion 24.

In the operating state, the indicator element 14 interacts with at least one reference limit surface of a counterpart. In particular, said indicator element interacts with a reference limit surface of a counterpart in such a way that the indicating edge 20 of the indicating first portion 16 of the indicator element 14 faces said limit surface, thus delimiting an indicator aperture.

In a preferred embodiment, said counterpart is formed by the second pad 7 of the disc brake 1, opposed to the first pad 6 with which the indicator element 14 is associated.

In particular, a surface which delimits the plate 9 of said opposing second pad 7 forms a reference limit surface 36, in such a way that an indicator aperture 40 is delimited, at least partially, between said indicating edge 20 and said reference limit surface 36 which essentially face each other.

It should be understood that any element connected to the second pad 7 to form an extension of said pad can be defined as a counterpart, and any surface of such an element can be defined as a reference limit surface.

The first pad 6 of the brake 1 does not return to the initial position after it has been brought closer to the disc 4 in the braking stage to permit contact between the braking surface 12 of the disc 4 and the friction material 10 of the pad 6. In other words, at the end of each braking operation, the friction material 10 moves away from the braking surface 12 of the disc 4 by a quantity predetermined at the design stage. Consequently, the plate 8 of the first pad 6 remains closer to the disc by a quantity equal to the wear which has occurred.

As the wear on the first pad 6 increases, the distance of the plate 8 of said pad from the braking surface of the disc decreases.

As in the case of the first pad 6, the plate 9 of the second pad 7 moves closer to the braking surface 12' of the disc 4 as the wear on the friction material 10' supported by said plate 9 of said pad 7 increases.

The extension of the indicator aperture 40, partially delimited by the indicating edge 20 of the indicator element 14 and by the reference limit surface 36 of the second pad 7, is reduced as the wear on the pads 6 and 7 increases.

In other words, as the wear on the pads 6 and 7 increases, the corresponding plates 8 and 9 move progressively closer to each other, so that the indicating edge 20 of the indicator element 14 and the reference limit surface 36 move closer to each other, thus closing the indicator aperture 40 formed between them.

In particular, if a first thickness is removed from the first pad 6 and a second thickness is removed from the second pad 7 as the wear on the pads 6 and 7 increases, the extension of the indicator aperture 40 is reduced by the sum of said first and second thicknesses.

Additionally, in the embodiment of the wear indicator which has at least one tooth 22 raised above the plane which essentially contains the indicating first portion 16 of the indicator element 14, said raised tooth is brought up to the reference limit surface 36 of the counterpart at an angle which is not perpendicular, thus preventing the tooth from interfering with the counterpart.

In particular, said tooth, when it is brought up to the edge of the reference limit surface, passes " over" said edge, and any contact with said edge of the reference limit surface causes only a raising of the first portion 16 of the indicator element 14.

Unusually, the pad wear indicator as described above measures in an optimal way even small variations in the layer of friction material of the pads. In other words, said wear indicator provides greater sensitivity of the resulting indication.

This is because the distance through which the indicating edge of the wear indicator and the counterpart move toward each other is essentially equal to the sum of the thicknesses of friction material removed from the first and second pads.

Moreover, the indication of the state of wear of the pads is not provided by an element which is more or less aligned with marks, on which dirt and mud can accumulate, but by the opening or closing of an aperture. This aperture can be positioned across the disc, in such a way that its extension is even more clearly visible because of the contrast with the peripheral surface of the disc.

Additionally, the wear indicator described above can avoid interference as the plate continues to advance, while simultaneously avoiding any possibility that said interference might detach the indicator or in any way displace it from its position of support on the plate.

The wear indicator as described has the further advantage that it can be produced from thin sheet metal by simple, rapid and inexpensive sheet cutting and bending operations.

Furthermore, said wear indicator has a shape which facilitates its secure fixing to the brake pad, and has the advantage of preventing said indicator from being detached from the pad and lost.

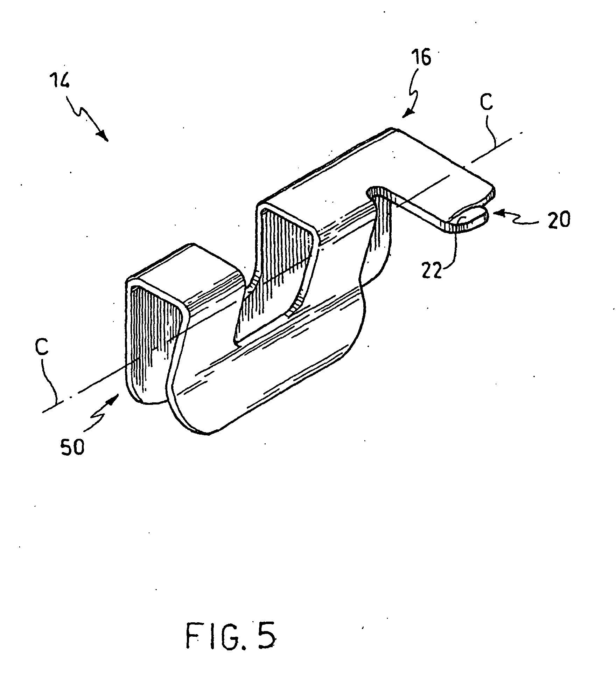

In a variant embodiment of the wear indicator, the indicator element 14 is provided with an indicating first portion 16 and a fixing portion 50 having an essentially U-shaped cross section which is not divided into a plurality of portions (figure 5).

In other words, said fixing portion 50 is uniform along the axis C-C, without a succession of solid and hollow portions.

In variant embodiments of the wear indicator, the indicating edge 20 of the indicator element 14 is shaped in various ways.

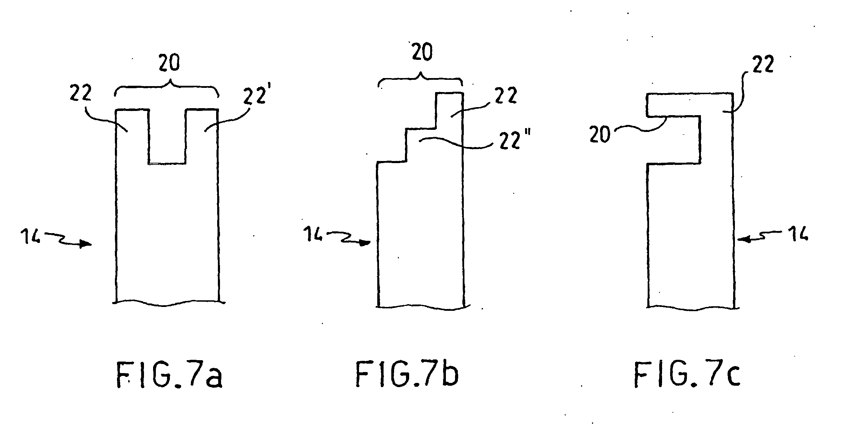

In particular, in a further embodiment, the indicator element 14 is provided with two teeth 22 and 22' projecting from said indicator element in the predominant direction and placed in opposing positions, in such a way that the indicating edge 20 is fork-shaped (figure 7a).

In a further embodiment, the indicating edge 20 of the indicator element 14 comprises teeth having different extensions in the predominant direction. For example, adjacent projecting teeth 22 and 22" of different lengths impart a stepped shape to the indicating edge 20 of the indicator element 14 (figure 7b).

Advantageously, the stepped shape of the indicating edge 20 of the indicator element 14 provides discrete measurement of the state of wear of the pads.

Additionally, if the dimensions of the steps are reduced and their number is increased, the indicator element provides discrete measurement of the state of wear of the pads with any desired degree of density. Ultimately, continuous measurement can be provided by making an indicating edge of triangular shape.

In a further embodiment, the projecting tooth 22 of the indicator element 14 is hook-shaped, in such a way that said indicator element 14 has a C-shaped terminal portion (figure 7c).

In further variant embodiments of the wear indicator, said wear indicator, in the operating state associated with the disc brake 1, is provided with a first and a second indicator element 14 and 14', each connected to one of the two opposing plates 8 and 9.

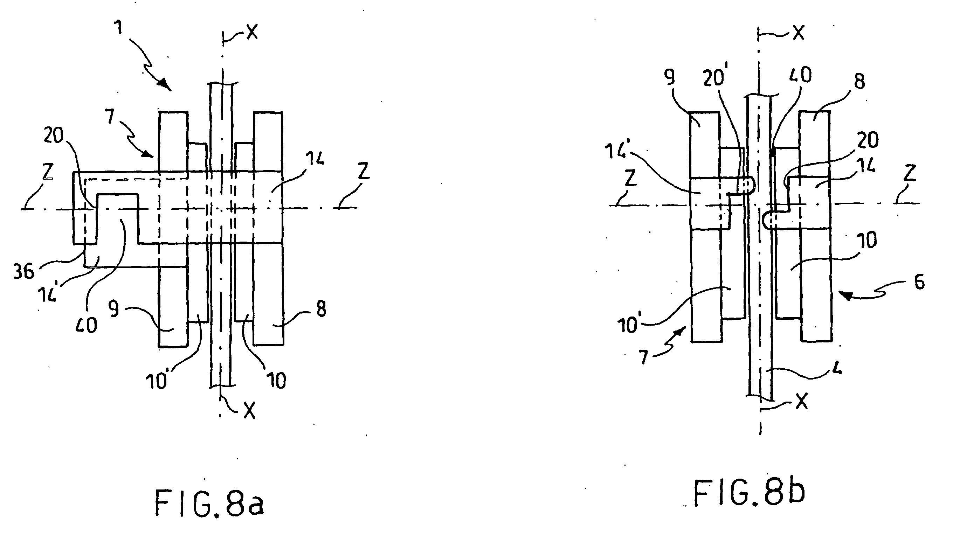

In one embodiment, the first indicator element 14, preferably C-shaped, extends across the disc 4, while the second indicator element 14' extends axially toward the outside of the second pad 7 (figure 8a).

In this variant embodiment, the indicator aperture 40 is delimited at least on two opposite sides by the indicating edge 20 of the first indicator element 14 and by the reference limit surface 36, consisting of the terminal surface of the second indicator element 14'.

In said variant embodiment, the indicator aperture 40 opens as the wear on the pads increases.

In a further embodiment, the first indicator element 14 and the second indicator element 14' project "over" the disc 4, in such a way that they essentially straddle said disc. The indicating edges of said indicator elements are positioned asymmetrically, in such a way as to delimit the indicator aperture 40 essentially on four sides (figure 8b).

In a further variant embodiment of the wear indicator, the indicator element is essentially a strip associated with a piston of the disc brake, which acts on the pad of said brake.

Additionally, in one variant embodiment, the indicator element is associated with a counterpart consisting of a strip which extends from a piston of the brake.

Clearly, a person skilled in the art can, in order to meet contingent and specific requirements, make numerous modifications and variations to the wear indicator described above, all such modifications and variations being contained within the scope of protection of the invention as defined in the following claims.

## Claims

1. A wear indicator which can be associated with a disc brake (1), said disc brake comprising a caliper body (2) straddling a disc having a predetermined axis (ZZ) and pads (6, 7) comprising friction material (10, 10') supported by plates (8, 9) housed in the caliper body (2) in opposing positions and facing the sides of the disc (4),
said wear indicator being provided with an indicator element (14) having at least one indicating edge (20) which interacts with at least one reference limit surface (36) of a counterpart,
said wear indicator being **characterized in that**
said indicator element (14) is suitable for being associated with one of the pads, or with a piston of the disc brake, and **in that**
said at least one indicating edge (20) in the operating state essentially faces the at least one limit surface (36) of the counterpart associated with the other pad or with a piston of the brake, delimiting at least partially, on essentially opposite sides, an indicator aperture (40), and
**in that** said at least one reference surface (36), in the operating state, modifies its position with respect to the indicating edge (20) during the wear of the friction material (10, 10') of the pads (6, 7) of the disc brake, by closing or opening said indicator aperture (40) at least partially on both of said essentially opposite sides.

2. The wear indicator as claimed in claim 1, in which, in the operating states, at least one out of the indicating edge (20) of the indicator element (14) and the reference limit surface (36) of the counterpart straddles the disc (4) of the disc brake (1).

3. The wear indicator as claimed in claim 1 or 2, in which said indicator element (14) comprises a first portion (16) for indication and a second portion (18) for fixing.

4. The wear indicator as claimed in claim 3, in which the indicating first portion (16) of the indicator element (14) projects beyond the fixing second portion (18) of said indicator element (14).

5. The wear indicator as claimed in claim 3 or 4, in which said indicating first portion is provided with at least one projecting tooth (22).

6. The wear indicator as claimed in claim 5, in which said tooth projects from the indicating first portion (16) of the indicator element (14), extending in the predominant direction of extension of said indicating first portion.

7. The wear indicator as claimed in claim 5, in which said projecting tooth is raised above a plane which essentially contains the indicating first portion (16).

8. The wear indicator as claimed in any one of claims 5 to 7, in which the indicating edge (20) comprises the edge of said at least one projecting tooth (22).

9. The wear indicator as claimed in claim 3 or 4, in which the indicating first portion (16) has teeth (22, 22'') having different extensions in the predominant direction of extension of said first portion.

10. The wear indicator as claimed, in claim 9, in which the indicating edge (20) comprises the edges of said teeth (22, 22'') having different extensions, which can provide a discrete measurement of the state of wear of the pads.

11. The wear indicator as claimed in claim 3 or 4, in which the indicating first portion (16) terminates in an essentially triangular shape, which can provide a continuous measurement of the state of wear of the pads.

12. The wear indicator as claimed in any one of Claims 3 to 11, in which said fixing second portion (18) of the indicator element (14) has an essentially U-shaped cross section.

13. The wear indicator as claimed in claim 12, in which said fixing second portion of the indicator element (14) forms, in association with the pad (6) of the disc brake (1), a snap fitting of said fixing second portion to the plate (8) of the pad (6) of the brake (1).

14. The wear indicator as claimed in one of claims 3 to 13, in which said indicating first portion, in the operating states, is positioned axially with respect to the disc (4) of the disc brake (1) and said fixing second portion is positioned in a direction essentially perpendicular to the axial direction of the disc (4) of the disc brake (1).

15. The wear indicator as claimed in any one of the preceding claims, provided with at least two indicator elements (14, 14'), placed, in the operating states, in opposing positions, and facing the sides of the disc (4).

16. The wear indicator as claimed in claim 15, in which one of said at least two indicator elements straddles the disc (4).

17. The wear indicator as claimed in any one of the preceding claims, in which said counterpart is a piston of the disc brake (1) and said reference limit surface (36) of said counterpart is a surface of an extension of said piston.

18. The wear indicator as claimed in any one of the preceding claims, in which the indicator element is associated with a counterpart consisting of a strip which extends from a piston of the brake.

19. The wear indicator as claimed in any one of the preceding claims, in which said counterpart is formed by a second pad (7) of the disc brake (1) opposed to a first pad (6) with which the indicator element (14) is associated.

20. The wear indicator as claimed in any one of the preceding claims, in which the counterpart is defined by an element connected to a second pad (7) to form an extension of said pad, any surface of said element being defined as a reference limit surface.

21. A maintenance kit comprising at least one pad (6, 7) for a disc brake and at least one wear indicator as claimed in any one of claims 1 to 20, which can be associated with said pad.

22. A caliper for disc brake (1) provided with a wear indicator as claimed in any one of claims 1 to 20.

23. The caliper as claimed in claim 22, in which said caliper is of the fixed type.

24. The caliper as claimed in claim 22, in which said caliper is of the floating type.

25. A disc brake (1) provided with a caliper as claimed in any one of claims 22 to 24.

## Patentansprüche

1. Verschleißanzeiger, der einer Scheibenbremse (1) zugeordnet werden kann, wobei die Scheibenbremse einen Bremssattelkörper (2), der auf einer Scheibe rittlings aufsitzt, die eine vorgegebene Achse (ZZ) aufweist, und Klötze (6,7) umfasst, die Reibmaterial (10, 10') umfassen, das durch Platten (8, 9) getragen wird, die in dem Bremssattelkörper (2) an entgegengesetzten Positionen und den Seiten der Scheibe (4) zugewandt untergebracht sind,
wobei der Verschleißanzeiger mit einem Anzeigerelement (14) versehen ist, das mindestens eine anzeigende Kante (20) aufweist, die mit mindestens einer Bezugsgrenzfläche (36) eines Gegenstücks zusammenwirkt,
wobei der Verschleißanzeiger **dadurch gekennzeichnet ist, dass**
das Anzeigerelement (14) geeignet ist, einem der Klötze oder einem Kolben der Scheibenbremse zugeordnet zu werden, und dadurch, dass
die mindestens eine anzeigende Kante (20) im Betriebszustand im Wesentlichen der mindestens einen Grenzfläche (36) des Gegenstücks, das dem anderen Klotz oder einem Kolben der Bremse zugeordnet ist, zugewandt ist und mindestens zum Teil an im Wesentlichen entgegengesetzten Seiten eine Anzeigeröffnung (40) begrenzt, und dadurch, dass
die mindestens eine Bezugsfläche (36) im Betriebszustand ihre Position in Bezug auf die anzeigende Kante (20) während des Verschleißes des Reibmaterials (10, 10') der Klötze (6, 7) der Scheibenbremse ändert, durch Schließen oder Öffnen der Anzeigeröffnung (40) zumindest zum Teil auf beiden der im Wesentlichen entgegengesetzten Seiten.

2. Verschleißanzeiger gemäß Anspruch 1, wobei in den Betriebszuständen mindestens eine aus der Gruppe umfassend die anzeigende Kante (20) des Anzeigerelements (14) und die Bezugsgrenzfläche (36) des Gegenstücks auf der Scheibe (4) der Scheibenbremse (1) rittlings aufsitzt.

3. Verschleißanzeiger gemäß Anspruch 1 oder 2, wobei das Anzeigerelement (14) einen ersten Abschnitt (16) zum Anzeigen und einen zweiten Abschnitt (18) zum Befestigen umfasst.

4. Verschleißanzeiger gemäß Anspruch 3, wobei der anzeigende erste Abschnitt (16) des Anzeigerelements (14) über den befestigenden zweiten Abschnitt (18) des Anzeigerelements (14) hinausragt.

5. Verschleißanzeiger gemäß Anspruch 3 oder 4, wobei der anzeigende erste Abschnitt mit mindestens einem vorragenden Zahn (22) versehen ist.

6. Verschleißanzeiger gemäß Anspruch 5, wobei der Zahn von dem anzeigenden ersten Abschnitt (16) des Anzeigerelements (14) vorragt und sich in der Haupterstreckungsrichtung des anzeigenden ersten Abschnitts erstreckt.

7. Verschleißanzeiger gemäß Anspruch 5, wobei der vorragende Zahn über eine Ebene hinaus erhaben ist, welche im Wesentlichen den anzeigenden ersten Abschnitt (16) enthält.

8. Verschleißanzeiger gemäß einem beliebigen der Ansprüche 5 bis 7, wobei die anzeigende Kante (20) die Kante des mindestens einen vorragenden Zahnes (22) umfasst.

9. Verschleißanzeiger gemäß Anspruch 3 oder 4, wobei der anzeigende erste Abschnitt (16) Zähne (22, 22") aufweist, die unterschiedliche Erstreckungen in der Haupterstreckungsrichtung des ersten Abschnittes aufweisen.

10. Verschleißanzeiger gemäß Anspruch 9, wobei die anzeigende Kante (20) die Kanten der Zähne (22, 22''), welche unterschiedliche Erstreckungen aufweisen, umfasst, was eine getrennte Messung des Verschleißzustandes der Klötze ermöglichen kann.

11. Verschleißanzeiger gemäß Anspruch 3 oder 4, wobei der anzeigende erste Abschnitt (16) in einer im Wesentlichen dreieckigen Gestalt endet, was eine kontinuierliche Messung des Verschleißzustandes der Klötze ermöglichen kann.

12. Verschleißanzeiger gemäß einem beliebigen der Ansprüche 3 bis 11, wobei der befestigende zweite Abschnitt (18) des Anzeigerelements (14) einen im Wesentlichen U-förmigen Querschnitt aufweist.

13. Verschleißanzeiger gemäß Anspruch 12, wobei der befestigende zweite Abschnitt des Anzeigerelements (14) gemeinsam mit dem Klotz (6) der Scheibenbremse (1) eine Schnappverbindung des befestigenden zweiten Abschnitts mit der Platte (8) des Klotzes (6) der Bremse (1) bildet.

14. Verschleißanzeiger gemäß einem beliebigen der Ansprüche 3 bis 13, wobei der anzeigende erste Abschnitt in den Betriebszuständen axial in Bezug auf die Scheibe (4) der Scheibenbremse (1) angeordnet ist und der befestigende zweite Abschnitt in einer Richtung, die im Wesentlichen senkrecht zur axialen Richtung der Scheibe (4) der Scheibenbremse (1) verläuft, angeordnet ist.

15. Verschleißanzeiger gemäß einem beliebigen der vorangehenden Ansprüche, welcher mit mindestens zwei Anzeigerelementen (14, 14') versehen ist, die in den Betriebszuständen an entgegengesetzten Positionen angeordnet und den Seiten der Scheibe (4) zugewandt sind.

16. Verschleißanzeiger gemäß Anspruch 15, wobei eines der mindestens zwei Anzeigerelemente auf der Scheibe (4) rittlings aufsitzt.

17. Verschleißanzeiger gemäß einem beliebigen der vorangehenden Ansprüche, wobei das Gegenstück ein Kolben der Scheibenbremse (1) ist und die Bezugsgrenzfläche (36) des Gegenstücks eine Oberfläche einer Verlängerung des Kolbens ist.

18. Verschleißanzeiger gemäß einem beliebigen der vorangehenden Ansprüche, wobei das Anzeigerelement einem Gegenstück zugeordnet ist, welches aus einer Leiste besteht, die sich von einem Kolben der Bremse wegerstreckt.

19. Verschleißanzeiger gemäß einem beliebigen der vorangehenden Ansprüche, wobei das Gegenstück durch einen zweiten Klotz (7) der Scheibenbremse (1) gebildet ist, welcher einem ersten Klotz (6), dem das Anzeigerelement (14) zugeordnet ist, gegenüberliegt.

20. Verschleißanzeiger gemäß einem beliebigen der vorangehenden Ansprüche, wobei das Gegenstück durch ein Element definiert ist, welches mit einem zweiten Klotz (7) verbunden ist, um eine Verlängerung des Klotzes zu bilden, wobei jedwede Oberfläche des Elements als Bezugsgrenzfläche definiert ist.

21. Wartungssatz, umfassend mindestens einen Klotz (6, 7) für eine Scheibenbremse und mindestens einen Verschleißanzeiger gemäß einem beliebigen der Ansprüche 1 bis 20, welcher dem Klotz zugeordnet werden kann.

22. Bremssattel für Scheibenbremse (1), die mit einem Verschleißanzeiger gemäß einem beliebigen der Ansprüche 1 bis 20 versehen ist.

23. Bremssattel gemäß Anspruch 22, wobei der Bremssattel vom Festsatteltyp ist.

24. Bremssattel gemäß Anspruch 22, wobei der Bremssattel vom Schwimmsatteltyp ist.

25. Scheibenbremse (1), die mit einem Bremssattel gemäß einem beliebigen der Ansprüche 22 bis 24 versehen ist.

## Revendications

1. Indicateur d'usure qui peut être associé à un frein à disque (1), ledit frein à disque comprenant un corps d'étrier (2) enjambant un disque ayant un axe prédéterminé (ZZ) et des plaquettes (6,7) comprenant un produit à friction (10, 10') supporté par des plaques (8, 9) logées dans le corps d'étrier (2) dans des positions opposées et en regard du côté du disque (4),
ledit indicateur d'usure étant pourvu d'un élément indicateur (14) ayant au moins un bord indicateur (20) qui interagit avec au moins une surface limite de référence (36) d'une contre-partie,
ledit indicateur d'usure étant **caractérisé en ce que**
ledit élément indicateur (14) est approprié pour être associé à l'une des plaquettes, ou avec un piston du frein à disque, et **en ce que**
ledit au moins un bord indicateur (20) dans l'état de fonctionnement est essentiellement en regard de la au moins une surface limite (36) et de la contre-partie associée à l'autre plaquette ou avec un piston du frein, délimitant au moins partiellement, sur les côtés essentiellement opposés, une ouverture indicateur (40) et
**en ce que** au moins ladite au moins une surface de référence (36), dans l'état de fonctionnement, modifie sa position par rapport au bord indicateur (20) pendant l'usure du produit à friction (10, 10') des plaquettes (6, 7) du frein à disque, en fermant ou en ouvrant ladite ouverture indicateur (40) au moins partiellement sur lesdits côtés essentiellement opposés.

2. Indicateur d'usure selon la revendication 1, dans lequel, dans les états de fonctionnement, au moins l'un parmi le bord indicateur (20) de l'élément indicateur (14) et la surface limite de référence (36) de la contre-partie enjambe le disque (4) du frein à disque (1).

3. Indicateur d'usure selon la revendication 1 ou 2, dans lequel ledit élément indicateur (14) comprend une première partie (16) destinée à l'indication et une seconde partie (18) destinée à la fixation.

4. Indicateur d'usure selon la revendication 3, dans lequel la première partie d'indication (16) de l'élément indicateur (14) dépasse au-delà de la seconde partie de fixation (18) dudit élément indicateur (14).

5. Indicateur d'usure selon la revendication 3 ou 4, dans lequel ladite première partie d'indication est pourvue d'au moins une dent en saillie (22).

6. Indicateur d'usure selon la revendication 5, dans lequel ladite dent dépasse de ladite première partie d'indication (16) de l'élément indicateur (14), se prolonge dans la direction prédominante d'extension de ladite première partie d'indication.

7. Indicateur d'usure selon la revendication 5, dans lequel ladite dent en saillie est élevée au dessus d'un plan qui contient essentiellement la première partie d'indication (16).

8. Indicateur d'usure selon l'une quelconque des revendications 5 à 7, dans lequel le bord indicateur (20) comprend le bord de ladite au moins une dent en saillie (22).

9. Indicateur d'usure selon la revendication 3 ou 4, dans lequel la première partie d'indication (16) comporte des dents (22, 22'') ayant différentes extensions dans la direction prédominante d'extension de ladite première partie.

10. Indicateur d'usure selon la revendication 9, dans lequel le bord indicateur (20) comprend les bords desdites dents (22, 22") ayant différentes extensions, qui peut fournir une mesure discrète de l'état d'usure des plaquettes.

11. Indicateur d'usure selon la revendication 3 ou 4, dans lequel la première partie d'indication (16) se termine en une forme essentiellement triangulaire, qui peut fournir une mesure continue de l'état d'usure des plaquettes.

12. Indicateur d'usure selon l'une quelconque des revendications 3 à 11, dans lequel ladite seconde partie de fixation (18) de l'élément indicateur (14) a une section transversale essentiellement en forme de U.

13. Indicateur d'usure selon la revendication 12, dans lequel ladite seconde partie de fixation de l'élément indicateur (14) forme, en association avec la plaquette (6) du frein à disque (1), un ajustement serré de ladite seconde partie de fixation à la plaque (8) de la plaquette (6) du frein (1).

14. Indicateur d'usure selon l'une quelconque des revendications 3 à 13, dans lequel ladite première partie d'indication, dans les états de fonctionnement, est positionnée axialement par rapport au disque (4) du frein à disque (1) et ladite seconde partie de fixation est positionnée dans une direction essentiellement perpendiculaire à la direction axiale du disque (4) du frein à disque (1).

15. Indicateur d'usure selon l'une quelconque des revendications précédentes, pourvu d'au moins deux éléments indicateurs (14, 14') placés, dans les états de fonctionnement, dans des positions opposées, et en regard des côtés du disque (4).

16. Indicateur d'usure selon la revendication 15, dans lequel l'un desdits au moins deux éléments indicateurs enjambe le disque (4).

17. Indicateur d'usure selon l'une quelconque des revendications précédentes, dans lequel ladite contre-partie est un piston du frein à disque (1) et ladite surface limite de référence (36) de ladite contre-partie est une surface d'une extension dudit piston.

18. Indicateur d'usure selon l'une quelconque des revendications précédentes, dans lequel l'élément indicateur est associé à une contre-partie consistant en une bande qui se prolonge à partir d'un piston du frein.

19. Indicateur d'usure selon l'une quelconque des revendications précédentes, dans lequel ladite contre-partie est formée par une seconde plaquette (7) du frein à disque (1) opposée à une première plaquette (6) avec laquelle l'élément indicateur (14) est associé.

20. Indicateur d'usure selon l'une quelconque des revendications précédentes, dans lequel la contre-partie est définie par un élément relié à une seconde plaquette (7) pour former une extension de ladite plaquette, toute surface dudit élément étant définie comme surface limite de référence.

21. Nécessaire de maintenance comprenant au moins une plaquette (6, 7) pour un frein à disque et au moins un indicateur d'usure selon l'une quelconque des revendications 1 à 20, qui peut être associé à ladite plaquette.

22. Etrier pour un frein à disque (1) pourvu d'un indicateur d'usure tel que revendiqué selon l'une quelconque des revendications 1 à 20.

23. Etrier selon la revendication 22, dans lequel ledit étrier est du type fixe.

24. Etrier selon la revendication 22, dans lequel ledit étrier est du type flottant.

25. Frein à disque (1) pourvu d'un étrier tel que revendiqué selon l'une quelconque des revendications 22 à 24.
